# EUROPEAN PATENT APPLICATION

(11) **EP 4 845 022 A1**
(43) Date of publication of application: **25.11.2026**
(21) Application number: 25744671.6
(22) Date of filing: 23.01.2025
(51) Int. Cl.: H02P 23/14, B60L 15/20, H02P 23/00, H02P 29/00, H02P 9/00, H02P 9/02, H02P 101/45

(54) **MOTOR ZERO POSITION ANGLE CALIBRATION METHOD, VEHICLE AND STORAGE MEDIUM**

(30) Priority: 23.01.2024 CN 202410097336
(71) Applicant: Great Wall Motor Company Limited, Baoding, Hebei 071000 (CN)
(72) Inventor: SUN, Yu, Baoding, Hebei 071000 (CN); ZHANG, Wenxian, Baoding, Hebei 071000 (CN); HUANG, Guanzhong, Baoding, Hebei 071000 (CN); ZHANG, Shuai, Baoding, Hebei 071000 (CN); GAO, Hanfei, Baoding, Hebei 071000 (CN); YANG, Guang, Baoding, Hebei 071000 (CN); LI, Weiliang, Baoding, Hebei 071000 (CN); TIAN, Xuechao, Baoding, Hebei 071000 (CN); WANG, Xuesong, Baoding, Hebei 071000 (CN); YUAN, Xueli, Baoding, Hebei 071000 (CN)
(74) Representative: Michalski Hüttermann & Partner mbB
(86) International application number: PCT/CN2025/074225
(87) International publication number: WO 2025/157208

(57) **Abstract**

Provided in the present application are a motor zero position angle calibration method, a vehicle and a storage medium. The method is applied to the field of vehicles, and the method comprises: if an obtained control signal sent by a vehicle control unit is a calibration mode setting signal, reading a reserved bit value of the calibration mode setting signal; if the reserved bit value is a preset calibration value, performing zero position angle calibration processing on a vehicle motor on the basis of the calibration mode setting signal, so as to obtain a calibrated zero position angle; and updating the motor zero position angle on the basis of the calibrated zero position angle, and using the updated motor zero position angle to control the vehicle motor to operate. The method can again determine whether the reserved bit value meets the preset calibration value after reception of the calibration mode setting signal, and uses an idle reserved bit as an identification bit, such that the vehicle motor is prevented from mistakenly entering the calibration mode under signal interference, thereby improving the accuracy of zero position angle calibration, and further ensuring the normal operation of the vehicle motor.

## Description

The present disclosure claims priority to the Chinese patent application No. 202410097336.8, entitled "MOTOR ZERO POSITION ANGLE CALIBRATION METHOD, VEHICLE AND STORAGE MEDIUM", filed on January 23, 2024 with the China National Intellectual Property Administration, which is incorporated herein by reference in its entirety.

### TECHNICAL FIELD

The present disclosure relates to the field of vehicles, and more particularly, to a method for calibrating a motor zero-position angle, a vehicle and a storage medium in the field of vehicles.

### BACKGROUND

A vehicle motor needs to determine a main magnetic field direction of a motor rotor through a zero-position angle. Therefore, a value of the zero-position angle is closely related to a torque that the vehicle motor can provide. An inaccurate zero-position angle can easily cause the vehicle motor to fail to output an optimal torque, and may even cause torque reversal. To determine the zero-position angle, a signal can be sent to the vehicle motor to make the vehicle motor switch to a calibration mode. The vehicle motor re-calibrates the zero-position angle in the calibration mode to obtain an accurate zero-position angle under a current state. However, the vehicle motor can only detect the accurate zero-position angle when there is no load. Since the vehicle motor may receive electromagnetic interference, such as electromagnetic pulses and radio frequency signals, the vehicle motor may identify an erroneous signal and enter the calibration mode for zero-position angle calibration when there is a load, thus obtaining an inaccurate zero-position angle and affecting a torque provided by the vehicle motor. Therefore, it is necessary to provide a method for calibrating a motor zero-position angle that can accurately obtain a zero-position angle.

### SUMMARY

The present disclosure provides a method for calibrating a motor zero-position angle, a vehicle, and a storage medium. The method can re-determine whether a value of a reserved bit conforms to a preset calibration value after receiving a calibration mode setting signal. If it conforms, it is determined to perform zero-position angle calibration to obtain an accurate zero-position angle. An idle reserved bit is used as an identifier bit, to prevent a vehicle motor from erroneously entering a calibration mode under signal interference, thereby improving the accuracy of zero-position angle calibration, and further ensuring the normal operation of the vehicle motor.

In a first aspect, a method for calibrating a motor zero-position angle is provided. The method includes:
reading, in response to obtaining a control signal sent from a vehicle control unit being a calibration mode setting signal, a value of a reserved bit in the calibration mode setting signal, where a value of a state quantity in the calibration mode setting signal is a calibration mode setting value;
performing, in response to the value of the reserved bit being a preset calibration value, zero-position angle calibration on a vehicle motor based on the calibration mode setting signal to obtain a calibrated zero-position angle; and
updating the motor zero-position angle based on the calibrated zero-position angle, and controlling operation of the vehicle motor by using the updated motor zero-position angle.

Through the above technical solution, after receiving a calibration mode setting signal, it is re-determined whether a value of a reserved bit conforms to a preset calibration value. If it conforms, it is determined to perform zero-position angle calibration to obtain an accurate zero-position angle. An idle reserved bit is used as an identifier bit, to prevent a vehicle motor from erroneously entering a calibration mode under signal interference, thereby improving the accuracy of zero-position angle calibration, and further ensuring the normal operation of the vehicle motor.

In combination with the first aspect, in some possible implementations, the method further includes:
obtaining the control signal sent from the vehicle control unit, and reading a value of a state quantity in the control signal; and
determining, in response to the value of the state quantity in the control signal being the calibration mode setting value, that the control signal is the calibration mode setting signal.

Through the above technical solution, which mode the vehicle motor needs to be adjusted to is determined based on the value of the state quantity in the control signal, thereby flexibly controlling the state switching of the vehicle motor.

In combination with the first aspect and the above implementation, in some possible implementations, reading the value of the reserved bit in the calibration mode setting signal includes:
reading a value of a first reserved bit in the calibration mode setting signal;
reading, in response to the value of the first reserved bit being a first preset calibration value, a value of a second reserved bit in the calibration mode setting signal; and
determining, in response to the value of the second reserved bit being a second preset calibration value, that the value of the reserved bit in the calibration mode setting signal is the preset calibration value.

Through the above technical solution, the vehicle motor is determined to be switched to the calibration mode only when both the value of the first reserved bit and the value of the second reserved bit are preset calibration values. The vehicle motor is prevented from performing zero-position angle calibration under an incorrect condition due to erroneous signal confusion.

In combination with the first aspect and the above implementation, in some possible implementations, the method further includes:
ignoring, in response to the value of the reserved bit not being the preset calibration value, the calibration mode setting signal.

In combination with the first aspect and the above implementation, in some possible implementations, ignoring, in response to the value of the reserved bit not being the preset calibration value, the calibration mode setting signal includes:
ignoring, in response to the value of the first reserved bit not being the first preset calibration value, the calibration mode setting signal; and
ignoring, in response to the value of the first reserved bit being the first preset calibration value and the value of the second reserved bit not being the second preset calibration value, the calibration mode setting signal.

Through the above technical solution, when it is detected that the value of the first reserved bit is not the first preset calibration value, ignore processing can be directly performed, further improving the identification efficiency of the calibration mode setting signal and improving the usage efficiency of the control signal of the motor.

In combination with the first aspect and the above implementation, in some possible implementations, before updating the motor zero-position angle based on the calibrated zero-position angle, the method further includes:
performing backup processing on the motor zero-position angle of the vehicle motor to obtain a historical zero-position angle, where a value of the historical zero-position angle is the same as a value of the motor zero-position angle.

In combination with the first aspect and the above implementation, in some possible implementations, the method further includes:
obtaining a motoring mode setting signal and a requested torque value sent from the vehicle control unit;
controlling the vehicle motor to perform a motoring operation based on the updated motor zero-position angle, and obtaining an actual torque value of the vehicle motor during the motoring operation; and
restoring, in response to a difference between the requested torque value and the actual torque value being greater than a torque-difference threshold, the updated motor zero-position angle based on the historical zero-position angle.

Through the above technical solution, by comparing the requested torque value with the actual torque value, it is further determined whether the calibrated zero-position angle is correct. If it is inaccurate, restoration can be performed to ensure the normal operation of the vehicle motor, further avoiding erroneous zero-position angle calibration.

In combination with the first aspect and the above implementation, in some possible implementations, the method further includes:
deleting, in response to the difference between the requested torque value and the actual torque value being less than or equal to the torque-difference threshold, the historical zero-position angle.

In a second aspect, an apparatus for calibrating a motor zero-position angle is provided. The apparatus includes:
a reserved bit reading module, configured to read, in response to obtaining a control signal sent from a vehicle control unit being a calibration mode setting signal, a value of a reserved bit in the calibration mode setting signal, where a value of a state quantity in the calibration mode setting signal is a calibration mode setting value;
a calibration processing module, configured to perform, in response to the value of the reserved bit being a preset calibration value, zero-position angle calibration on a vehicle motor based on the calibration mode setting signal to obtain a calibrated zero-position angle; and
a zero-position angle update module, configured to update the motor zero-position angle based on the calibrated zero-position angle, and control operation of the vehicle motor by using the updated motor zero-position angle.

In a third aspect, a vehicle is provided. The vehicle includes:
a memory for storing executable program code; and
a processor for calling and running the executable program code from the memory, to cause the vehicle to execute the method in the first aspect or any one of the possible implementations of the first aspect.

In a fourth aspect, a computer program product is provided. The computer program product includes: computer program code, where when the computer program code runs on a computer, the computer executes the method in the first aspect or any one of the possible implementations of the first aspect.

In a fifth aspect, a computer-readable storage medium is provided. The computer-readable storage medium stores computer program code, where when the computer program code runs on a computer, the computer executes the method in the first aspect or any one of the possible implementations of the first aspect.

### BRIEF DESCRIPTION OF THE DRAWINGS

FIG. 1 is an example schematic diagram of a vehicle motor entering a calibration mode according to an embodiment of the present disclosure;
FIG. 2 is a schematic flowchart of a method for calibrating a motor zero-position angle according to an embodiment of the present disclosure;
FIG. 3 is a schematic flowchart of a method for calibrating a motor zero-position angle according to an embodiment of the present disclosure;
FIG. 4 is an example schematic diagram of restoring a zero-position angle according to an embodiment of the present disclosure;
FIG. 5 is a structural schematic diagram of an apparatus for calibrating a motor zero-position angle according to an embodiment of the present disclosure;
FIG. 6 is a structural schematic diagram of an apparatus for calibrating a motor zero-position angle according to an embodiment of the present disclosure; and
FIG. 7 is a structural schematic diagram of a vehicle according to an embodiment of the present disclosure.

### DETAILED DESCRIPTION OF THE EMBODIMENTS

The technical solutions in the present disclosure will be described clearly and in detail below with reference to the accompanying drawings. In the description of the embodiments of the present disclosure, unless otherwise specified, "/" represents or. For example, A/B can represent A or B. The "and/or" in the text is only an association relationship describing associated objects, indicating that there can be three relationships. For example, A and/or B can represent three situations: A alone, A and B simultaneously, and B alone. In addition, in the description of the embodiments of the present disclosure, "a plurality of" refers to two or more.

Hereinafter, the terms "first" and "second" are only used for descriptive purposes and cannot be understood as implying or suggesting relative importance or implicitly indicating the number of indicated technical features. Thus, features defined with "first" or "second" may explicitly or implicitly include one or more of such features.

A vehicle motor in a vehicle can provide power for the vehicle and assist in starting of an engine. For example, the vehicle motor can be an Integrated Starter Generator (ISG) motor. The ISG motor is a motor system used for starting and power generation in an automobile engine. For example, the ISG motor can be installed on a vehicle generator and connected to a crankshaft of the engine. It can provide starting power to bring the engine into an operating state when the vehicle starts, i.e., assist the engine in starting by providing torque. Even when the engine is running, the ISG motor can provide an additional torque to enhance the power output of the engine. In addition, when the vehicle decelerates or stops during driving, the ISG motor can generate electricity, thereby feeding power back to a vehicle battery for charging. A zero-position angle of the vehicle motor reflects an angle of the vehicle motor caused by factors such as an assembly structure of the vehicle motor. The zero-position angle is an important parameter for the operation of the vehicle motor and can be used to determine an initial position of the motor rotor for motor control and torque measurement. When the vehicle motor is in a calibration mode, the zero-position angle is calibrated and recorded in a memory of a motor control system of the vehicle motor for calling and updating.

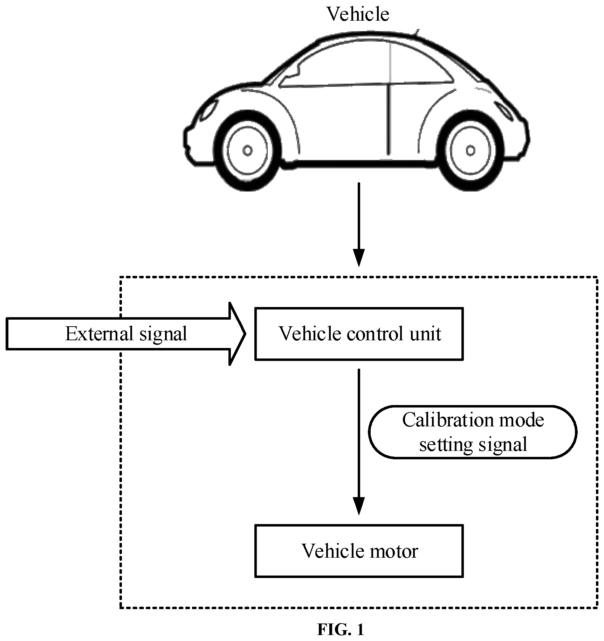

FIG. 1 is referred to, which is an example schematic diagram of a vehicle motor entering a calibration mode according to an embodiment of the present disclosure. A vehicle control unit can be an Electronic Control Unit (ECU) in the vehicle, which is a microprocessor used to control and manage various vehicle systems. The vehicle control unit can send various control signals to the vehicle motor to set the vehicle motor to various modes, such as a calibration mode, a motoring mode, and a power generation mode. In the calibration mode, the vehicle motor calibrates a zero-position angle to obtain a calibrated zero-position angle, and updates a motor zero-position angle stored in the memory based on the calibrated zero-position angle, thereby controlling the operation of the vehicle motor based on the updated motor zero-position angle. In the motoring mode, the vehicle motor can provide a torque to a vehicle generator to assist in starting of an engine or enhance power output of the engine. In the power generation mode, the vehicle motor can charge a vehicle battery. An apparatus for calibrating a motor zero-position angle is used to receive and identify a control signal from the vehicle control unit and control the vehicle motor to switch to different modes. The apparatus for calibrating the motor zero-position angle can be the vehicle motor or a motor control system module of the vehicle motor, or it can be a module in the vehicle motor for implementing a method for calibrating the motor zero-position angle.

The control signal can be an ECU signal. A state quantity SETMODE in the control signal is used to indicate different modes of the vehicle motor. For example, when the state quantity SETMODE=2, the control signal may be a motoring mode setting signal, used for controlling the vehicle motor to switch to the motoring mode. When the state quantity SETMODE=1, the control signal may indicate a power generation mode, which is used for controlling the vehicle motor to switch to the power generation mode. Since the state quantity in the control signal can represent values from 0 to 7 at most, the apparatus for calibrating the motor zero-position angle can set a state quantity of the calibration mode to a calibration mode setting value not within a value range of 0~7. For example, the calibration mode setting value can be set to 12, that is, when the state quantity SETMODE=12, the control signal may indicate a calibration mode setting signal. When the vehicle motor has been operated continuously for too long or for other reasons, a user or relevant staff can send an external signal to the vehicle control unit to control the vehicle control unit to generate a calibration mode setting signal. The external signal is an electromagnetic pulse signal or radio frequency signal additionally sent to the vehicle control unit. The external signal can assist the vehicle control unit in setting the state quantity to the calibration mode setting value corresponding to the calibration mode, which is not within the value range of 0~7, thereby controlling the vehicle control unit to generate the calibration mode setting signal.

When the vehicle control unit is affected by other interference signals, the state quantity of the vehicle control unit may be set to the calibration mode setting value due to interference from other interference signals, which may cause the vehicle motor to erroneously enter the calibration mode under a loaded condition. An erroneous motor zero-position angle is obtained, which affects subsequent normal operation of the vehicle motor. To ensure that the vehicle motor can receive a correct calibration mode setting signal and enter the calibration mode under a correct no-load condition, in the calibration mode setting signal sent from the vehicle control unit, it is not only required to set the state quantity to be the calibration mode setting value, but also required to set a value of a reserved bit in the calibration mode setting signal to be a preset calibration value. That is, after receiving the calibration mode setting signal, the apparatus for calibrating the motor zero-position angle also needs to read the value of the reserved bit before controlling the vehicle motor to enter a setting mode. A reserved bit can include RSVD0 and RSVD1 located in an Identifier field of the ECU signal. RSVD0 can be located at the fourth bit, and RSVD1 can be located at the fifth bit. In a general ECU signal, reserved bits are all 0. Therefore, the preset calibration value can be set to a value other than 0, to facilitate the apparatus for calibrating the motor zero-position angle in further identifying the calibration mode setting signal.

The method for calibrating the motor zero-position angle provided by the present disclosure is described in detail below with reference to specific embodiments.

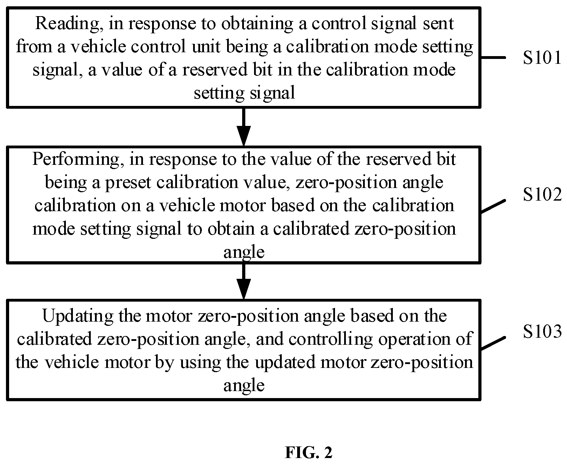

FIG. 2 is referred to, which is a schematic flowchart of a method for calibrating a motor zero-position angle according to an embodiment of the present disclosure. As shown in FIG. 2, the method of the embodiment of the present disclosure can include the following steps S101-S103.

In S101, in response to obtaining a control signal sent from a vehicle control unit being a calibration mode setting signal, a value of a reserved bit in the calibration mode setting signal is read.

Specifically, the apparatus for calibrating the motor zero-position angle obtains the control signal sent from the vehicle control unit and reads a value of a state quantity in the control signal. In response to the value of the state quantity in the control signal being a calibration mode setting value, it indicates that the signal sent from the vehicle control unit is the calibration mode setting signal, which is used for controlling the vehicle motor to enter the calibration mode for zero-position angle calibration. After obtaining the calibration mode setting signal, to avoid the calibration mode setting signal being mistakenly generated by the vehicle control unit due to interference from other interference signals, the apparatus for calibrating the motor zero-position angle reads the value of the reserved bit in the calibration mode setting signal. Since reserved bits are generally not enabled in an ECU signal, and are all 0, the apparatus for calibrating the motor zero-position angle can determine whether the calibration mode setting signal is an erroneously generated control signal through the value of the reserved bit.

In S102, in response to the value of the reserved bit being a preset calibration value, zero-position angle calibration is performed on the vehicle motor based on the calibration mode setting signal to obtain a calibrated zero-position angle.

Specifically, in response to the value of the reserved bit being the preset calibration value, the apparatus for calibrating the motor zero-position angle determines that the calibration mode setting signal is not erroneously generated, that is, the vehicle motor is currently in a no-load state suitable for zero-position angle calibration. Then, the apparatus for calibrating the motor zero-position angle controls the vehicle motor to switch to the calibration mode based on the calibration mode setting signal, i.e., performs zero-position angle calibration on the vehicle motor to obtain a calibrated zero-position angle. The calibrated zero-position angle is the zero-position angle value detected when the vehicle motor receives the calibration mode setting signal. The preset calibration value can be a value other than 0, which can be an initial setting of the apparatus for calibrating the motor zero-position angle, or can be set by a user or relevant staff.

In S103, the motor zero-position angle is updated based on the calibrated zero-position angle, and operation of the vehicle motor is controlled by using the updated motor zero-position angle.

Specifically, the apparatus for calibrating the motor zero-position angle updates the motor zero-position angle stored in the memory based on the calibrated zero-position angle, that is, the updated motor zero-position angle has the same value as the calibrated zero-position angle. The apparatus for calibrating the motor zero-position angle controls the operation of the vehicle motor by using the updated motor zero-position angle.

In the embodiment of the present disclosure, in response to obtaining a control signal sent from a vehicle control unit being a calibration mode setting signal, a value of a reserved bit in the calibration mode setting signal is read, where a value of a state quantity in the calibration mode setting signal is a calibration mode setting value. In response to the value of the reserved bit being a preset calibration value, zero-position angle calibration is performed on the vehicle motor based on the calibration mode setting signal to obtain a calibrated zero-position angle. The motor zero-position angle is updated based on the calibrated zero-position angle, and operation of the vehicle motor is controlled by using the updated motor zero-position angle. After receiving a calibration mode setting signal, it is re-determined whether a value of a reserved bit conforms to a preset calibration value. If it conforms, it is determined to perform zero-position angle calibration to obtain an accurate zero-position angle. An idle reserved bit is used as an identifier bit, to prevent the vehicle motor from erroneously entering a calibration mode under signal interference, thereby improving the accuracy of zero-position angle calibration, and further ensuring the normal operation of the vehicle motor.

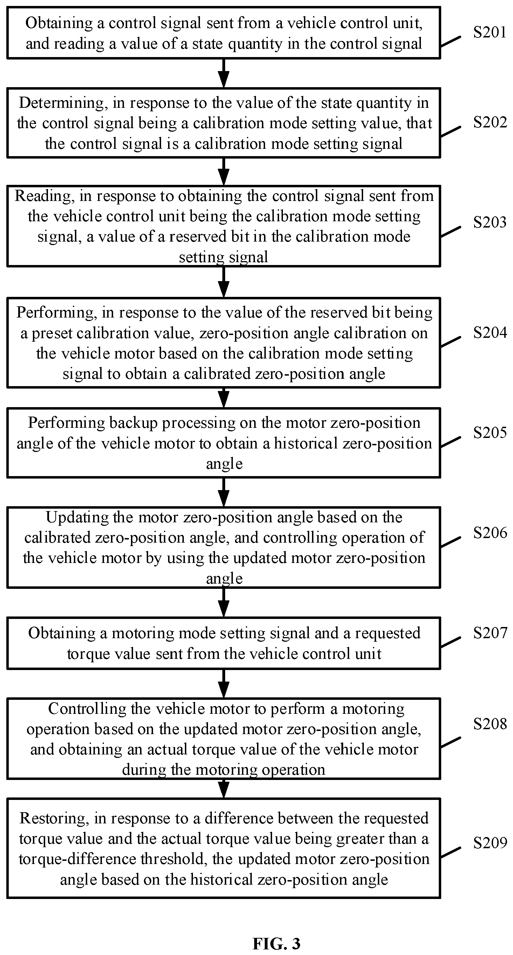

FIG. 3 is referred to, which is a schematic flowchart of a method for calibrating a motor zero-position angle according to an embodiment of the present disclosure. As shown in FIG. 3, the method of the embodiment of the present disclosure can include the following steps S201-S209.

In S201, a control signal sent from a vehicle control unit is obtained, and a value of a state quantity in the control signal is read.

Specifically, the apparatus for calibrating the motor zero-position angle obtains the control signal sent from the vehicle control unit. To identify the purpose of the control signal, the apparatus for calibrating the motor zero-position angle reads the value of the state quantity in the control signal. Different values of the state quantity correspond to different control signals. For example, if the value of the state quantity SETMODE=2, the control signal may be a motoring mode setting signal. If the value of the state quantity SETMODE=1, the control signal may indicate a power generation mode, etc.

In S202, in response to the value of the state quantity in the control signal being a calibration mode setting value, it is determined that the control signal is a calibration mode setting signal.

Specifically, in response to the value of the state quantity being the calibration mode setting value, the apparatus for calibrating the motor zero-position angle determines the control signal as the calibration mode setting signal, which is used for controlling the vehicle motor to enter the calibration mode for zero-position angle calibration. The calibration mode setting value can be an initial setting of the motor zero-position angle calibration, or it can be set by a user or relevant staff.

Optionally, the value of the state quantity that can be represented in the ECU signal has a value range. For example, the value range can be 0~7, indicating that the value of the state quantity in the signal generated by the ECU can only be represented as a value within the value range of 0~7. A user or relevant staff can send an external signal to the vehicle control unit to change the value of the state quantity in the control signal to a value not within the value range. That is, the vehicle control unit cannot autonomously generate the calibration mode setting signal, thereby preventing the vehicle from mistakenly generating the calibration mode setting signal internally, which causes the vehicle motor to calibrate the zero-position angle erroneously. Therefore, the calibration mode setting value can be set to a value not within the value range, for example, it can be set to 12.

In S203, in response to obtaining the control signal sent from the vehicle control unit being a calibration mode setting signal, a value of a reserved bit in the calibration mode setting signal is read.

Specifically, in response to the control signal obtained by the apparatus for calibrating the motor zero-position angle from the vehicle control unit being the calibration mode setting signal, to avoid the calibration mode setting signal being mistakenly generated by the vehicle control unit due to interference from other interference signals, the apparatus for calibrating the motor zero-position angle reads the value of the reserved bit in the calibration mode setting signal. Since reserved bits are generally not enabled in an ECU signal, and are all 0, the apparatus for calibrating the motor zero-position angle can determine whether the calibration mode setting signal is an erroneously generated control signal through the value of the reserved bit.

In S204, in response to the value of the reserved bit being a preset calibration value, zero-position angle calibration is performed on the vehicle motor based on the calibration mode setting signal to obtain a calibrated zero-position angle.

Specifically, in response to the value of the reserved bit being the preset calibration value, the apparatus for calibrating the motor zero-position angle determines that the calibration mode setting signal is not erroneously generated, that is, the vehicle motor is currently in a no-load state suitable for zero-position angle calibration. Then, the apparatus for calibrating the motor zero-position angle controls the vehicle motor to switch to the calibration mode based on the calibration mode setting signal, i.e., performs zero-position angle calibration on the vehicle motor to obtain a calibrated zero-position angle. The calibrated zero-position angle is the zero-position angle value detected when the vehicle motor receives the calibration mode setting signal. The preset calibration value can be a value other than 0, which can be an initial setting of the apparatus for calibrating the motor zero-position angle, or can be set by a user or relevant staff.

Optionally, the reserved bit can be a first reserved bit and a second reserved bit, and the preset calibration values can be a first preset calibration value and a second preset calibration value respectively. For example, the first reserved bit and the second reserved bit can be RSVD0 and RSVD1 in an identifier field of an ECU signal, where the first reserved bit can be before the second reserved bit. The apparatus for calibrating the motor zero-position angle first reads a value of the first reserved bit in the calibration mode setting signal. In response to the value of the first reserved bit being the first preset calibration value, it can continue to read a value of the second reserved bit in the calibration mode setting signal. In response to the value of the second reserved bit being the second preset calibration value, it is determined that the value of the reserved bit in the calibration mode setting signal is the preset calibration value. The first preset calibration value and the second preset calibration value can be values other than 0, and they can be the same or different. For example, the first preset calibration value can be 1, and the second preset calibration value can be 4.

Optionally, in response to the value of the reserved bit not being the preset calibration value, the apparatus for calibrating the motor zero-position angle determines that the calibration mode setting signal is mistakenly generated by the vehicle control unit due to an interference signal, and ignores the calibration mode setting signal. Ignoring represents not responding to the calibration mode setting signal, not storing the calibration mode setting signal, and clearing a cache corresponding to the calibration mode setting signal. The erroneous signal is not responded to, and the corresponding cache is cleared. Storage resources are saved, and the utilization rate of computing resources is improved. In addition, a misoperation signal or an external interference signal is prevented from causing the motor to erroneously enter the calibration mode, further improving safety. If the apparatus for calibrating the motor zero-position angle reads that the value of the first reserved bit is the first preset calibration value and the value of the second reserved bit is not the second preset calibration value, it is determined that the value of the reserved bit is not the preset calibration value, and the apparatus for calibrating the motor zero-position angle ignores the calibration mode setting signal. If the apparatus for calibrating the motor zero-position angle reads that the value of the first reserved bit is not the first preset calibration value, it is not required to continue reading the value of the second reserved bit, and the apparatus for calibrating the motor zero-position angle directly determines that the value of the reserved bit is not the preset calibration value, and ignores the calibration mode setting signal, thereby improving the identification efficiency of the calibration mode setting signal.

In S205, backup processing is performed on the motor zero-position angle of the vehicle motor to obtain a historical zero-position angle.

Specifically, to further avoid abnormal updates of the zero-position angle caused by abnormal zero-position angle calibration, the apparatus for calibrating the motor zero-position angle performs backup processing on the motor zero-position angle of the vehicle motor stored in the memory to obtain a historical zero-position angle. A value of the historical zero-position angle is the same as a value of the motor zero-position angle.

In S206, the motor zero-position angle is updated based on the calibrated zero-position angle, and operation of the vehicle motor is controlled by using the updated motor zero-position angle.

Specifically, the apparatus for calibrating the motor zero-position angle updates the motor zero-position angle stored in the memory based on the calibrated zero-position angle, that is, the updated motor zero-position angle has the same value as the calibrated zero-position angle. The apparatus for calibrating the motor zero-position angle controls the operation of the vehicle motor by using the updated motor zero-position angle.

In S207, a motoring mode setting signal and a requested torque value sent from the vehicle control unit are obtained.

Specifically, since the zero-position angle has a greater impact on a motoring mode of the vehicle motor than on a power generation mode, when the apparatus for calibrating the motor zero-position angle obtains the motoring mode setting signal for the first time after updating the motor zero-position angle, it detects the updated zero-position angle to determine whether the updated zero-position angle is accurate. The apparatus for calibrating the motor zero-position angle obtains the motoring mode setting signal and the requested torque value sent from the vehicle control unit for the first time after updating the motor zero-position angle. That is, the motoring mode setting signal and the requested torque value used for detecting the zero-position angle are the motoring mode setting signal and requested torque value first sent from the vehicle control unit after updating the zero-position angle. The motoring mode setting signal is a control signal with a value of its state quantity being a motoring mode setting value, and is used for controlling the vehicle motor to switch to a motoring state, where the motoring mode setting value can be 2. The requested torque value is a torque value that the vehicle motor may generate or consume, which is calculated in real time by the vehicle control unit based on parameters such as vehicle motor current, voltage, speed, and temperature.

In S208, the vehicle motor is controlled to perform a motoring operation based on the updated motor zero-position angle, and an actual torque value of the vehicle motor during the motoring operation is obtained.

Specifically, since the apparatus for calibrating the motor zero-position angle has obtained the motoring mode setting signal, the apparatus for calibrating the motor zero-position angle controls the vehicle motor to switch to the motoring mode, i.e., controls the vehicle motor to perform a motoring operation based on the updated motor zero-position angle, and obtains the actual torque value of the vehicle motor during the motoring operation.

In S209, in response to a difference between the requested torque value and the actual torque value being greater than a torque-difference threshold, the updated motor zero-position angle is restored based on the historical zero-position angle.

Specifically, if a difference between the requested torque value and the actual torque value is greater than the torque-difference threshold, it indicates that the updated motor zero-position angle is not accurate, and there may be an abnormality in the zero-position angle calibration. The apparatus for calibrating the motor zero-position angle restores the updated motor zero-position angle based on the historical zero-position angle, i.e., restores the value of the motor zero-position angle to the value of the historical zero-position angle. The torque-difference threshold can be an initial setting of the apparatus for calibrating the motor zero-position angle, or can be set by a user or relevant staff, for example, it can be 3N·m.

Optionally, after restoring the updated motor zero-position angle, that is, after the value of the motor zero-position angle is restored to the value of the historical zero-position angle, the apparatus for calibrating the motor zero-position angle deletes the historical zero-position angle from the memory. Deleting the backup historical zero-position angle from the memory can free up memory space, and can also avoid mixing valid data with invalid data, ensuring that the motor can operate based on the accurate zero-position angle value, further improving the stability of the motor operation.

Optionally, in response to the difference between the requested torque value and the actual torque value being less than or equal to the torque-difference threshold, it indicates that the updated motor zero-position angle is an accurate value, and the apparatus for calibrating the motor zero-position angle deletes the historical zero-position angle.

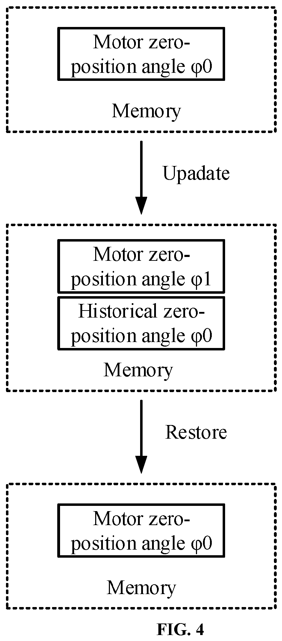

FIG. 4 is referred to, which is an example schematic diagram of restoring a zero-position angle according to an embodiment of the present disclosure. The motor zero-position angle of the vehicle motor in the memory is φ0, and the calibrated zero-position angle obtained after the zero-position angle calibration is φ1. After the motor zero-position angle is updated based on the calibrated zero-position angle, the updated motor zero-position angle is φ1, and the historical zero-position angle is φ0. If the difference between the requested torque value and the actual torque value is greater than the torque-difference threshold, that is, the calibrated zero-position angle is inaccurate, the apparatus for calibrating the motor zero-position angle restores the motor zero-position angle φ1 in the memory to the motor zero-position angle φ0, and deletes the historical zero-position angle φ0 in the memory.

In the embodiment of the present disclosure, the control signal sent from the vehicle control unit is obtained, and the value of the state quantity in the control signal is read. In response to the value of the state quantity being the calibration mode setting value, the control signal is determined as the calibration mode setting signal. Which mode the vehicle motor needs to be adjusted to is determined based on the value of the state quantity in the control signal, thereby flexibly controlling the state switching of the vehicle motor. If the control signal obtained from the vehicle control unit is the calibration mode setting signal, the value of the reserved bit in the calibration mode setting signal is read. In response to the value of the reserved bit being the preset calibration value, zero-position angle calibration is performed on the vehicle motor based on the calibration mode setting signal to obtain the calibrated zero-position angle. In response to the value of the reserved bit not being the preset calibration value, the apparatus for calibrating the motor zero-position angle determines that the calibration mode setting signal is mistakenly generated by the vehicle control unit due to an interference signal, and ignores the calibration mode setting signal. After receiving a calibration mode setting signal, it is re-determined whether a value of a reserved bit conforms to a preset calibration value. If it conforms, it is determined to perform zero-position angle calibration to obtain an accurate zero-position angle. An idle reserved bit is used as an identifier bit, to prevent the vehicle motor from erroneously entering a calibration mode under signal interference, thereby improving the accuracy of zero-position angle calibration, and further ensuring the normal operation of the vehicle motor. Backup processing is performed on the motor zero-position angle of the vehicle motor to obtain the historical zero-position angle. The motor zero-position angle is updated based on the calibrated zero-position angle. The operation of the vehicle motor is controlled by using the updated motor zero-position angle. The motoring mode setting signal and the requested torque value sent from the vehicle control unit are obtained. The vehicle motor is controlled to perform a motoring operation based on the updated motor zero-position angle, and the actual torque value of the vehicle motor during the motoring operation is obtained. If the difference between the requested torque value and the actual torque value is greater than the torque-difference threshold, the updated motor zero-position angle is restored based on the historical zero-position angle. By comparing the requested torque value with the actual torque value, it is further determined whether the calibrated zero-position angle is correct. If it is inaccurate, restoration can be performed to ensure the normal operation of the vehicle motor, further avoiding erroneous zero-position angle calibration.

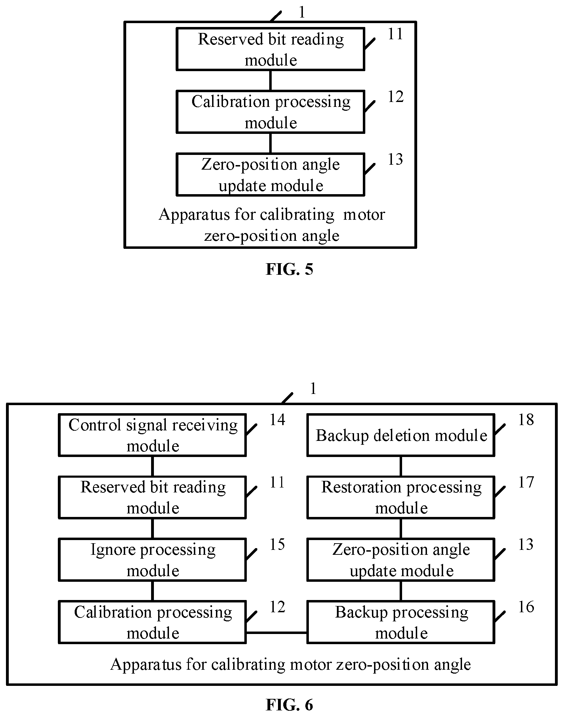

The apparatus for calibrating the motor zero-position angle provided by the embodiments of the present disclosure will be described in detail below with reference to FIG. 5 and FIG. 6. The apparatus for calibrating the motor zero-position angle in FIG. 5 and FIG. 6 is used to perform the methods of the embodiments shown in FIG. 1 to FIG. 4 of the present disclosure. For ease of illustration, only parts related to the embodiments of the present disclosure are shown. For specific technical details not disclosed, please refer to the embodiments shown in FIG. 1 to FIG. 4 of the present disclosure.

FIG. 5 is referred to, which shows a structural schematic diagram of an apparatus for calibrating a motor zero-position angle provided by an exemplary embodiment of the present disclosure. The apparatus for calibrating the motor zero-position angle can be implemented, in whole or in part, by software, hardware, or a combination thereof. The apparatus 1 includes a reserved bit reading module 11, a calibration processing module 12 and a zero-position angle update module 13.

The reserved bit reading module 11 is configured to read, in response to obtaining a control signal sent from a vehicle control unit being a calibration mode setting signal, a value of a reserved bit in the calibration mode setting signal, where a value of a state quantity in the calibration mode setting signal is a calibration mode setting value.

The calibration processing module 12 is configured to perform, in response to the value of the reserved bit being a preset calibration value, zero-position angle calibration on a vehicle motor based on the calibration mode setting signal to obtain a calibrated zero-position angle.

The zero-position angle update module 13 is configured to update the motor zero-position angle based on the calibrated zero-position angle, and control operation of the vehicle motor by using the updated motor zero-position angle.

In the embodiment of the present disclosure, in response to obtaining a control signal sent from a vehicle control unit being a calibration mode setting signal, a value of a reserved bit in the calibration mode setting signal is read, where a value of a state quantity in the calibration mode setting signal is a calibration mode setting value. In response to the value of the reserved bit being a preset calibration value, zero-position angle calibration is performed on the vehicle motor based on the calibration mode setting signal to obtain a calibrated zero-position angle. The motor zero-position angle is updated based on the calibrated zero-position angle, and operation of the vehicle motor is controlled by using the updated motor zero-position angle. After receiving a calibration mode setting signal, it is re-determined whether a value of a reserved bit conforms to a preset calibration value. If it conforms, it is determined to perform zero-position angle calibration to obtain an accurate zero-position angle. An idle reserved bit is used as an identifier bit, to prevent the vehicle motor from erroneously entering a calibration mode under signal interference, thereby improving the accuracy of zero-position angle calibration, and further ensuring the normal operation of the vehicle motor.

FIG. 6 is referred to, which shows a structural schematic diagram of an apparatus for calibrating a motor zero-position angle provided by an exemplary embodiment of the present disclosure. The apparatus for calibrating the motor zero-position angle can be implemented, in whole or in part, by software, hardware, or a combination thereof. The apparatus 1 includes a control signal receiving module 14, a reserved bit reading module 11, an ignore processing module 15, a calibration processing module 12, a backup processing module 16, a zero-position angle update module 13, a restoration processing module 17, and a backup deletion module 18.

The control signal receiving module 14 is configured to obtain a control signal sent from a vehicle control unit, and read a value of a state quantity in the control signal; and determine, in response to the value of the state quantity in the control signal being a calibration mode setting value, that the control signal is a calibration mode setting signal.

The reserved bit reading module 11 is configured to read, in response to obtaining the control signal sent from the vehicle control unit being the calibration mode setting signal, a value of a reserved bit in the calibration mode setting signal, where a value of a state quantity in the calibration mode setting signal is the calibration mode setting value.

Optionally, the reserved bit reading module 11 is specifically configured to read a value of a first reserved bit in the calibration mode setting signal;
read, in response to the value of the first reserved bit being a first preset calibration value, a value of a second reserved bit in the calibration mode setting signal; and
determine, in response to the value of the second reserved bit being a second preset calibration value, that the value of the reserved bit in the calibration mode setting signal is a preset calibration value.

The ignore processing module 15 is configured to ignore, in response to the value of the reserved bit not being the preset calibration value, the calibration mode setting signal.

Optionally, the ignore processing module 15 is specifically configured to ignore, in response to the value of the first reserved bit not being the first preset calibration value, the calibration mode setting signal; and
ignore, in response to the value of the first reserved bit being the first preset calibration value and the value of the second reserved bit not being the second preset calibration value, the calibration mode setting signal.

The calibration processing module 12 is configured to perform, in response to the value of the reserved bit being the preset calibration value, zero-position angle calibration on the vehicle motor based on the calibration mode setting signal to obtain a calibrated zero-position angle.

The backup processing module 16 is configured to perform backup processing on the motor zero-position angle of the vehicle motor to obtain a historical zero-position angle, where a value of the historical zero-position angle is the same as a value of the motor zero-position angle.

The zero-position angle update module 13 is configured to update the motor zero-position angle based on the calibrated zero-position angle, and control operation of the vehicle motor by using the updated motor zero-position angle.

The restoration processing module 17 is configured to obtain a motoring mode setting signal and a requested torque value sent from the vehicle control unit;
control the vehicle motor to perform a motoring operation based on the updated motor zero-position angle, and obtain an actual torque value of the vehicle motor during the motoring operation; and
restore, in response to a difference between the requested torque value and the actual torque value being greater than a torque-difference threshold, the updated motor zero-position angle based on the historical zero-position angle.

The backup deletion module 18 is configured to delete, in response to the difference between the requested torque value and the actual torque value being less than or equal to the torque-difference threshold, the historical zero-position angle.

In the embodiment of the present disclosure, the control signal sent from the vehicle control unit is obtained, and the value of the state quantity in the control signal is read. In response to the value of the state quantity being the calibration mode setting value, the control signal is determined as the calibration mode setting signal. Which mode the vehicle motor needs to be adjusted to is determined based on the value of the state quantity in the control signal, thereby flexibly controlling the state switching of the vehicle motor. If the control signal obtained from the vehicle control unit is the calibration mode setting signal, the value of the reserved bit in the calibration mode setting signal is read. In response to the value of the reserved bit being the preset calibration value, zero-position angle calibration is performed on the vehicle motor based on the calibration mode setting signal to obtain the calibrated zero-position angle. In response to the value of the reserved bit not being the preset calibration value, the apparatus for calibrating the motor zero-position angle determines that the calibration mode setting signal is mistakenly generated by the vehicle control unit due to an interference signal, and ignores the calibration mode setting signal. After receiving a calibration mode setting signal, it is re-determined whether a value of a reserved bit conforms to a preset calibration value. If it conforms, it is determined to perform zero-position angle calibration to obtain an accurate zero-position angle. An idle reserved bit is used as an identifier bit, to prevent the vehicle motor from erroneously entering a calibration mode under signal interference, thereby improving the accuracy of zero-position angle calibration, and further ensuring the normal operation of the vehicle motor. Backup processing is performed on the motor zero-position angle of the vehicle motor to obtain the historical zero-position angle. The motor zero-position angle is updated based on the calibrated zero-position angle. The operation of the vehicle motor is controlled by using the updated motor zero-position angle. The motoring mode setting signal and the requested torque value sent from the vehicle control unit are obtained. The vehicle motor is controlled to perform a motoring operation based on the updated motor zero-position angle, and the actual torque value of the vehicle motor during the motoring operation is obtained. If the difference between the requested torque value and the actual torque value is greater than the torque-difference threshold, the updated motor zero-position angle is restored based on the historical zero-position angle. By comparing the requested torque value with the actual torque value, it is further determined whether the calibrated zero-position angle is correct. If it is inaccurate, restoration can be performed to ensure the normal operation of the vehicle motor, further avoiding erroneous zero-position angle calibration.

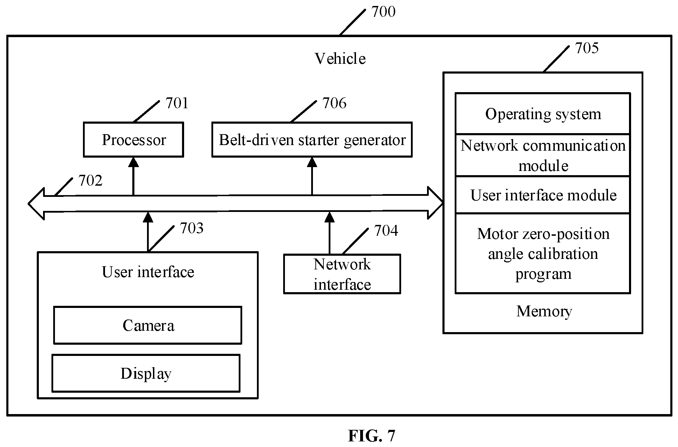

FIG. 7 is referred to, which is a structural schematic diagram of a vehicle according to an embodiment of the present disclosure. As shown in FIG. 7, a vehicle 700 may include: at least one vehicle processor 701, at least one network interface 704, a user interface 703, a memory 705, at least one communication bus 702, and at least one belt-driven starter generator 707.

The communication bus 702 is used to implement connection and communication among these components.

The user interface 703 may include a display and a camera. Optionally, the user interface 703 may also include standard wired interfaces and wireless interfaces.

The network interface 704 may optionally include standard wired interfaces and wireless interfaces (such as WI-FI interfaces).

The vehicle processor 701 may include one or more processing cores. The vehicle processor 701 uses various interfaces and lines to connect various parts of the entire vehicle 700. By running or executing instructions, programs, code sets, or instruction sets stored in the memory 705, and calling data stored in the memory 705, it executes various functions of the vehicle 700 and processes data. Optionally, the vehicle processor 701 can be implemented using at least one of Digital Signal Processing (DSP), Field-Programmable Gate Array (FPGA), or Programmable Logic Array (PLA). The vehicle processor 701 may integrate a combination of one or more of a Central Processing Unit (CPU), a Graphics Processing Unit (GPU), and a modem. The CPU mainly processes an operating system, user interface, and applications; the GPU is used for rendering and drawing the content that the display screen needs to display; the modem is used for processing wireless communication. The above modem may not be integrated into the vehicle processor 701, but implemented separately through a chip.

The memory 705 may include a Random Access Memory (RAM), and may also include a Read-Only Memory (ROM). Optionally, the memory 705 includes a non-transitory computer-readable storage medium. The memory 705 can be used to store instructions, programs, codes, code sets, or instruction sets. The memory 705 may include a program storage area and a data storage area, where the program storage area can store instructions for implementing the operating system, instructions for at least one function (such as touch function, sound play function, image play function, etc.), instructions for implementing the above various method embodiments, etc.; the data storage area can store data involved in the above various method embodiments. The memory 705 may optionally also be at least one storage device located remotely from the aforementioned vehicle processor 701. As shown in FIG. 7, the memory 705, as a kind of computer storage medium, may include an operating system, a network communication module, a user interface module, and a motor zero-position angle calibration acquisition program.

In the vehicle 700 shown in FIG. 7, the user interface 703 is mainly used to provide an interface for user input and obtain data input by the user; and the vehicle processor 701 can be used to call the motor zero-position angle calibration acquisition program stored in the memory 705, and specifically execute the following operations:
reading, in response to obtaining a control signal sent from a vehicle control unit being a calibration mode setting signal, a value of a reserved bit in the calibration mode setting signal, where a value of a state quantity in the calibration mode setting signal is a calibration mode setting value;
performing, in response to the value of the reserved bit being a preset calibration value, zero-position angle calibration on a vehicle motor based on the calibration mode setting signal to obtain a calibrated zero-position angle; and
updating the motor zero-position angle based on the calibrated zero-position angle, and controlling operation of the vehicle motor by using the updated motor zero-position angle.

In some embodiments, when executing the method for calibrating the motor zero-position angle, the vehicle processor 701 further executes the following steps:
obtaining the control signal sent from the vehicle control unit, and reading a value of a state quantity in the control signal; and
determining, in response to the value of the state quantity in the control signal being the calibration mode setting value, that the control signal is the calibration mode setting signal.

In some embodiments, when reading a value of a reserved bit in the calibration mode setting signal, the vehicle processor 701 specifically executes the following steps:
reading a value of a first reserved bit in the calibration mode setting signal;
reading, in response to the value of the first reserved bit being a first preset calibration value, a value of a second reserved bit in the calibration mode setting signal; and
determining, in response to the value of the second reserved bit being a second preset calibration value, that the value of the reserved bit in the calibration mode setting signal is the preset calibration value.

In some embodiments, when executing the method for calibrating the motor zero-position angle, the vehicle processor 701 further executes the following step:
ignoring, in response to the value of the reserved bit not being the preset calibration value, the calibration mode setting signal.

In some embodiments, when ignoring, in response to the value of the reserved bit not being the preset calibration value, the calibration mode setting signal, the vehicle processor 701 specifically executes the following steps:
ignoring, in response to the value of the first reserved bit not being the first preset calibration value, the calibration mode setting signal; and
ignoring, in response to the value of the first reserved bit being the first preset calibration value and the value of the second reserved bit not being the second preset calibration value, the calibration mode setting signal.

In some embodiments, before performing update processing on the motor zero-position angle based on the calibrated zero-position angle, the vehicle processor 701 further executes the following step:
performing backup processing on the motor zero-position angle of the vehicle motor to obtain a historical zero-position angle, where a value of the historical zero-position angle is the same as a value of the motor zero-position angle.

In some embodiments, when executing the method for calibrating the motor zero-position angle, the vehicle processor 701 further executes the following steps:
obtaining a motoring mode setting signal and a requested torque value sent from the vehicle control unit;
controlling the vehicle motor to perform a motoring operation based on the updated motor zero-position angle, and obtaining an actual torque value of the vehicle motor during the motoring operation; and
restoring, in response to a difference between the requested torque value and the actual torque value being greater than a torque-difference threshold, the updated motor zero-position angle based on the historical zero-position angle.

In some embodiments, when executing the method for calibrating the motor zero-position angle, the vehicle processor 701 further executes the following step:
deleting, in response to the difference between the requested torque value and the actual torque value being less than or equal to the torque-difference threshold, the historical zero-position angle.

In the embodiment of the present disclosure, the control signal sent from the vehicle control unit is obtained, and the value of the state quantity in the control signal is read. In response to the value of the state quantity being the calibration mode setting value, the control signal is determined as the calibration mode setting signal. Which mode the vehicle motor needs to be adjusted to is determined based on the value of the state quantity in the control signal, thereby flexibly controlling the state switching of the vehicle motor. If the control signal obtained from the vehicle control unit is the calibration mode setting signal, the value of the reserved bit in the calibration mode setting signal is read. In response to the value of the reserved bit being the preset calibration value, zero-position angle calibration is performed on the vehicle motor based on the calibration mode setting signal to obtain the calibrated zero-position angle. In response to the value of the reserved bit not being the preset calibration value, the apparatus for calibrating the motor zero-position angle determines that the calibration mode setting signal is mistakenly generated by the vehicle control unit due to an interference signal, and ignores the calibration mode setting signal. After receiving a calibration mode setting signal, it is re-determined whether a value of a reserved bit conforms to a preset calibration value. If it conforms, it is determined to perform zero-position angle calibration to obtain an accurate zero-position angle. An idle reserved bit is used as an identifier bit, to prevent the vehicle motor from erroneously entering a calibration mode under signal interference, thereby improving the accuracy of zero-position angle calibration, and further ensuring the normal operation of the vehicle motor. Backup processing is performed on the motor zero-position angle of the vehicle motor to obtain the historical zero-position angle. The motor zero-position angle is updated based on the calibrated zero-position angle. The operation of the vehicle motor is controlled by using the updated motor zero-position angle. The motoring mode setting signal and the requested torque value sent from the vehicle control unit are obtained. The vehicle motor is controlled to perform a motoring operation based on the updated motor zero-position angle, and the actual torque value of the vehicle motor during the motoring operation is obtained. If the difference between the requested torque value and the actual torque value is greater than the torque-difference threshold, the updated motor zero-position angle is restored based on the historical zero-position angle. By comparing the requested torque value with the actual torque value, it is further determined whether the calibrated zero-position angle is correct. If it is inaccurate, restoration can be performed to ensure the normal operation of the vehicle motor, further avoiding erroneous zero-position angle calibration.

This embodiment further provides a computer-readable storage medium, which stores computer program code. When the computer program code runs on a computer, it causes the computer to execute relevant method steps to implement the method for calibrating the motor zero-position angle provided in the above embodiments.

This embodiment further provides a computer program product. When the computer program product runs on a computer, it causes the computer to execute relevant steps to implement the method for calibrating the motor zero-position angle provided in the above embodiments.

The apparatus, computer-readable storage medium, computer program product, and chip provided in this embodiment are all used to execute the corresponding methods provided above. Therefore, the beneficial effects they can achieve can refer to the beneficial effects in the corresponding methods provided above, which will not be repeated here.

Through the description of the above implementations, those skilled in the art can understand that, for the convenience and simplicity of description, only the division of the above functional modules is used as an example for illustration. In practical applications, the above functions can be allocated to different functional modules as needed, that is, the internal structure of the device is divided into different functional modules to complete all or part of the functions described above.

In the embodiments provided in the present disclosure, the disclosed devices and methods can be implemented in other ways. For example, the device embodiments described above are merely illustrative. For example, the division of modules or units is only a logical function division. In actual implementation, there may be other division methods. For example, multiple units or components may be combined or integrated into another device, or some features may be ignored, or not implemented. On another point, the mutual coupling or direct coupling or communication connection shown or discussed may be indirect coupling or communication connection through some interfaces, devices or units, which may be electrical, mechanical, or in other forms.

The above content is only the specific implementation methods of the present disclosure, but the protection scope of the present disclosure is not limited thereto. Any person familiar with the technical field can easily think of changes or substitutions within the technical scope disclosed in the present disclosure, which should be covered within the protection scope of the present disclosure. Therefore, the protection scope of the present disclosure should be based on the protection scope of the claims.

## Claims

1. A method for calibrating a motor zero-position angle, comprising:
reading, in response to obtaining a control signal sent from a vehicle control unit being a calibration mode setting signal, a value of a reserved bit in the calibration mode setting signal, wherein a value of a state quantity in the calibration mode setting signal is a calibration mode setting value;
performing, in response to the value of the reserved bit being a preset calibration value, zero-position angle calibration on a vehicle motor based on the calibration mode setting signal to obtain a calibrated zero-position angle; and
updating the motor zero-position angle based on the calibrated zero-position angle, and controlling operation of the vehicle motor by using the updated motor zero-position angle.

2. The method according to claim 1, further comprising:
obtaining the control signal sent from the vehicle control unit, and reading a value of a state quantity in the control signal; and
determining, in response to the value of the state quantity in the control signal being the calibration mode setting value, that the control signal is the calibration mode setting signal.

3. The method according to claim 2, wherein the calibration mode setting value is not within a value range of the state quantity.

4. The method according to claim 1, wherein reading the value of the reserved bit in the calibration mode setting signal comprises:
reading a value of a first reserved bit in the calibration mode setting signal;
reading, in response to the value of the first reserved bit being a first preset calibration value, a value of a second reserved bit in the calibration mode setting signal; and
determining, in response to the value of the second reserved bit being a second preset calibration value, that the value of the reserved bit in the calibration mode setting signal is the preset calibration value.

5. The method according to claim 4, further comprising:
ignoring, in response to the value of the reserved bit not being the preset calibration value, the calibration mode setting signal.

6. The method according to claim 5, wherein ignoring, in response to the value of the reserved bit not being the preset calibration value, the calibration mode setting signal comprises:
ignoring, in response to the value of the first reserved bit not being the first preset calibration value, the calibration mode setting signal; and
ignoring, in response to the value of the first reserved bit being the first preset calibration value and the value of the second reserved bit not being the second preset calibration value, the calibration mode setting signal.

7. The method according to claim 6, wherein ignoring the calibration mode setting signal comprises:
not responding to the calibration mode setting signal, and clearing a cache corresponding to the calibration mode setting signal.

8. The method according to claim 1, wherein before updating the motor zero-position angle based on the calibrated zero-position angle, the method further comprises:
performing backup processing on the motor zero-position angle of the vehicle motor to obtain a historical zero-position angle, wherein a value of the historical zero-position angle is the same as a value of the motor zero-position angle.

9. The method according to claim 8, further comprising:
obtaining a motoring mode setting signal and a requested torque value sent from the vehicle control unit;
controlling the vehicle motor to perform a motoring operation based on the updated motor zero-position angle, and obtaining an actual torque value of the vehicle motor during the motoring operation; and
restoring, in response to a difference between the requested torque value and the actual torque value being greater than a torque-difference threshold, the updated motor zero-position angle based on the historical zero-position angle.

10. The method according to claim 9, wherein obtaining the motoring mode setting signal and the requested torque value sent from the vehicle control unit comprises:
obtaining the motoring mode setting signal and the requested torque value first sent from the vehicle control unit after updating the motor zero-position angle based on the calibrated zero-position angle.

11. The method according to claim 9, wherein restoring, in response to the difference between the requested torque value and the actual torque value being greater than the torque-difference threshold, the updated motor zero-position angle based on the historical zero-position angle comprises:
restoring, in response to the difference between the requested torque value and the actual torque value being greater than the torque-difference threshold, the updated motor zero-position angle based on the historical zero-position angle, and deleting the historical zero-position angle.

12. The method according to claim 9, further comprising:
deleting, in response to the difference between the requested torque value and the actual torque value being less than or equal to the torque-difference threshold, the historical zero-position angle.

13. An apparatus for calibrating a motor zero-position angle, comprising:
a reserved bit reading module, configured to read, in response to obtaining a control signal sent from a vehicle control unit being a calibration mode setting signal, a value of a reserved bit in the calibration mode setting signal, wherein a value of a state quantity in the calibration mode setting signal is a calibration mode setting value;
a calibration processing module, configured to perform, in response to the value of the reserved bit being a preset calibration value, zero-position angle calibration on a vehicle motor based on the calibration mode setting signal to obtain a calibrated zero-position angle; and
a zero-position angle update module, configured to update the motor zero-position angle based on the calibrated zero-position angle, and control operation of the vehicle motor by using the updated motor zero-position angle.

14. A vehicle, comprising:
a memory for storing executable program code; and
a processor for calling and running the executable program code from the memory, to cause the vehicle to execute the method according to any one of claims 1 to 12.

15. A computer-readable storage medium, wherein the computer-readable storage medium stores a computer program, and when the computer program is executed, the method according to any one of claims 1 to 12 is implemented.
